# FASCICULE DE BREVET EUROPEEN

(11) **EP 4 168 756 B1**
(45) Date de publication et mention de la délivrance du brevet: **30.07.2025**
(21) Numéro de dépôt: 21734326.8
(22) Date de dépôt: 18.06.2021
(51) Int. Cl.: G01F 23/292

(54) **SYSTÈME DE DÉTECTION D'UN ÉTAT DE REMPLISSAGE D'UN FLACON D'UN DIFFUSEUR**
SYSTEM ZUR ERKENNUNG EINES FÜLLZUSTANDS EINES DIFFUSORFLÄSCHCHENS
SYSTEM FOR DETECTING A FILLING STATE OF A DIFFUSER VIAL

(30) Priorité: 18.06.2020 FR 2006355
(43) Date de publication de la demande: 26.04.2023
(73) Titulaire: Ceva Santé Animale, 33500 Libourne (FR)
(72) Inventeur: CAVELIER, Brice, 31400 TOULOUSE (FR); CAPDEVIELLE, Marc, 31400 TOULOUSE (FR); JOLY, Flavien, 31400 TOULOUSE (FR)
(74) Mandataire: Plasseraud IP
(86) Numéro de dépôt international: PCT/EP2021/066685
(87) Numéro de publication internationale: WO 2021/255274

(56) Documents cités:
- EP-B1- 1 866 000
- WO-A1-2007/138247
- WO-A1-2009/130235
- WO-A1-2010/080340
- WO-A1-2019/115996
- WO-A1-2020/016022
- US-B1- 6 448 574

## Description

L'invention concerne le domaine des diffuseurs de produits volatiles. Plus précisément, l'invention concerne un système de détection d'un état de remplissage d'un flacon d'un diffuseur.

Un diffuseur permet de diffuser un produit volatile dans l'air d'un espace généralement confiné, par exemple pour diffuser un insecticide, un parfum d'ambiance, une huile essentielle destinée à de l'aromathérapie, ou encore une composition destinée à prévenir un problème de stress médical ou comportemental d'un animal de compagnie comme un chien ou un chat.

Le produit à diffuser est généralement contenu dans un flacon, lequel peut être par exemple installé dans un organe de diffusion muni d'une fiche électrique mâle, dans le cas d'un diffuseur électrique. L'utilisateur vient ainsi brancher le diffuseur sur un socle électrique mural femelle, et l'organe de diffusion vient alors diffuser le produit contenu dans le flacon. Le flacon se vide au fur et à mesure de la diffusion du produit, à l'issue de laquelle il est nécessaire de remplacer le flacon vide par une recharge neuve.

Il a été constaté que les utilisateurs de diffuseur n'ont pas accès de façon facile à l'état de remplissage du flacon, lequel ne peut être constaté que de visu. Ils doivent par ailleurs vérifier périodiquement cet état afin de pouvoir remplacer un flacon vide, ou encore commander un nouveau flacon avant que le flacon en cours d'utilisation soit vide.

Ces contraintes entrainent ainsi une mauvaise observance par les utilisateurs de l'utilisation continue des diffuseurs. Par exemple, dans le domaine de la prévention du stress d'un animal de compagnie, il a été constaté qu'en moyenne, les utilisateurs n'utilisent que deux flacons par an, alors que la durée d'une diffusion complète du produit contenu dans un flacon n'est que d'un mois. Or, les bénéfices attendus de la diffusion d'un produit n'apparaissent généralement qu'après une longue période de diffusion continue, en particulier dans le cas de l'aromathérapie ou dans le cas de la prévention du stress d'un animal de compagnie. La mauvaise observance induite par ces contraintes ne permet donc pas d'obtenir ces bénéfices.

Il a été imaginé d'envoyer une notification aux utilisateurs, au bout d'une période prédéterminée, correspondant à une durée théorique de diffusion complète, pour les prévenir de changer le flacon. Toutefois, cette solution n'est pas satisfaisante, dans la mesure où la durée de diffusion complète varie en fonction du type de produit, du type de technologie et/ou du type de mèche employé par le diffuseur et des conditions atmosphériques de la pièce dans laquelle est installé le diffuseur. Un diffuseur avec une unité d'acquisition d'un état de remplissage d'un flacon tel que connu dans l'art antérieur est divulgué, par exemple, dans la publication internationale de brevet: WO 2007/138247 A1.

Il existe ainsi un besoin pour un système permettant à un utilisateur d'un diffuseur de pouvoir remplacer le flacon du diffuseur quand il est vide, de pouvoir commander une recharge avant que le flacon soit vide, afin de permettre une utilisation continue du diffuseur. L'invention se place dans ce contexte, et vise à répondre à ce besoin.

A ces fins, l'invention a pour objet un système de détection d'un état de remplissage d'un flacon d'un diffuseur, le flacon contenant un produit destiné à être diffusé, le système comportant une unité d'acquisition pourvue d'un capteur optique destiné à être disposé en vis-à-vis du flacon pour acquérir au moins un faisceau lumineux ayant traversé le flacon, une unité de traitement agencée pour détecter, à partir dudit faisceau lumineux, si un niveau de remplissage du flacon est inférieur à un seuil prédéterminé et une unité de communication agencée pour transmettre une notification relative audit niveau de remplissage à un appareil électronique distant en fonction de ladite détection

Le capteur optique peut par exemple être apte à acquérir une image du flacon, cette image étant générée par un faisceau de lumière, naturelle ou ambiante ou encore générée par une source dédiée, traversant le flacon ou apte à acquérir un faisceau de lumière directif traversant le flacon. L'unité d'acquisition peut par exemple être destinée à être montée sur le diffuseur pour être positionnée de sorte à acquérir ledit faisceau lumineux traversant le flacon. En variante, l'unité d'acquisition peut être intégrée au diffuseur en y étant agencée de sorte à acquérir ledit faisceau lumineux traversant le flacon. On comprend ainsi que le capteur optique est agencé dans l'unité d'acquisition de sorte à acquérir ledit faisceau lumineux traversant le flacon au niveau d'une position correspondant à la position du flacon. L'utilisation d'un capteur optique est particulièrement avantageuse dans la mesure où, lorsque le flacon est en fin d'utilisation, il est compliqué d'obtenir une information sur la quantité de produit restante au moyen d'autres types de capteurs, par exemple par pesée. Le capteur optique est ainsi agencé pour acquérir ledit faisceau lumineux traversant le flacon de façon périodique, par exemple une fois par jour. De la sorte, l'unité de traitement peut détecter de façon régulière l'état de remplissage du flacon vis-à-vis du seuil prédéterminé, et l'unité de communication peut transmettre une notification sur un téléphone intelligent ou une tablette numérique de l'utilisateur, lui indiquant l'état de remplissage du flacon vis-à-vis de ce seuil, voire le niveau de remplissage en tant que tel, et donc en d'autres termes, la quantité de produit restant dans le flacon, par exemple exprimé en pourcentage, voire l'alertant sur la nécessité de remplacer le flacon, dès que possible ou après une durée qu'il est possible de définir de façon fiable.

Selon l'invention, le diffuseur peut être un diffuseur électrique. Par exemple, le diffuseur peut comporter une fiche électrique mâle destinée à coopérer avec un socle électrique mural femelle, un organe de diffusion et un flacon, monté sur l'organe de diffusion de façon démontable, contenant un produit destiné à être diffusé. En variante, le diffuseur peut comporter un socle destiné à reposer sur une surface plane et/ou comporter une source d'énergie électrique, comme par exemple une batterie électrique ou une pile. Le flacon peut notamment comporter un corps avec une paroi de fond, et une mèche agencée dans le flacon en étant plongée dans le produit pour le faire remonter, par capillarité, vers l'organe de diffusion du diffuseur. L'organe de diffusion peut être agencé pour diffuser le produit contenu dans le flacon, lorsqu'il est alimenté électriquement, par exemple par ultrasons ou par évaporation. Il peut par exemple comprendre une résistance chauffante ou une platine piézoélectrique. En variante encore, l'organe de diffusion peut être agencé pour diffuser le produit contenu dans le flacon, lorsqu'il est alimenté électriquement, par nébulisation (ou micro-diffusion), par ventilation. Le cas échéant, l'organe de diffusion peut comporter un compresseur et une tête de nébulisation ou un ventilateur et un tampon destiné à être imbibé par ledit produit.

Selon un autre exemple, le diffuseur peut être un diffuseur nomade, fonctionnant sans électricité.

De façon non limitative, le produit peut être un insecticide ou un répulsif à insecte, un désinfectant, un antiseptique, un inhibiteur de moisissure, un parfum, une huile essentielle, un éliminateur d'odeur, un désodorisant, une composition comprenant des phéromones (par ex. à destination des chats) ou un produit de composition équivalente, ou une combinaison de plusieurs de ces produits.

Selon l'invention, le capteur optique comporte au moins un capteur de lumière infrarouge et l'unité d'acquisition comporte au moins un émetteur de lumière infrarouge destiné à être disposé en vis-à-vis du flacon en face du capteur de lumière infrarouge et agencé pour émettre au moins un faisceau lumineux infrarouge au travers du flacon vers le capteur optique. Par exemple, l'émetteur de lumière infrarouge peut être une diode électroluminescente infrarouge et le capteur optique peut être un phototransistor. Le cas échéant, l'unité de traitement étant agencée pour déterminer que le niveau de remplissage du flacon est inférieur audit seuil prédéterminé lorsque le capteur optique reçoit ledit faisceau lumineux infrarouge. La détection peut par exemple être opérée par l'unité de traitement lorsqu'elle constate que l'intensité lumineuse d'un faisceau lumineux reçu par le capteur optique dépasse un seuil donné. On notera que si le niveau du liquide passe au-dessus du trajet optique normal du faisceau lumineux émis par l'émetteur, ce faisceau est réfracté par le liquide lorsqu'il traverse le flacon et le capteur optique ne le reçoit pas. Il est ainsi possible de détecter que le niveau du liquide est au-dessus d'une position associée à ce capteur, laquelle détermine ainsi ledit seuil de détection de l'unité de traitement. A contrario, si le niveau du liquide passe en dessous du trajet optique normal du faisceau lumineux, ce faisceau lumineux ne subit donc sensiblement aucune déviation et le capteur optique le reçoit. Il est ainsi possible de détecter que le niveau du liquide est en dessous d'une position associée à ce capteur.

Avantageusement, l'émetteur de lumière infrarouge et le capteur de lumière infrarouge sont destinés à être disposés en vis-à-vis d'une paroi latérale du flacon et au droit d'une paroi inférieure du flacon. En d'autres termes, le seuil de détection de l'unité de traitement correspond à un flacon sensiblement vide, et la notification émise par l'unité de communication peut ainsi indiquer un état vide ou non vide du flacon et être le cas échéant associée à une instruction de remplissage du flacon.

Selon l'invention revendiquée, l'unité d'acquisition comporte deux capteurs de lumière infra-rouge destinés à être disposés en vis-à-vis du flacon en deux endroits différents, à une même hauteur, et deux émetteurs de lumière infrarouge destinés chacun à être disposé en vis-à-vis du flacon en face de l'un des capteur de lumière infrarouge et agencé pour émettre au moins un faisceau lumineux infrarouge au travers du flacon vers ce capteur optique. Par exemple, les paires capteur-émetteur peuvent être destinés à être disposées de part et d'autre d'un plan diamétral du flacon. Ces caractéristiques permettent notamment de détecter l'état de remplissage du flacon, quelle que soit l'inclinaison du flacon.

Selon un exemple, le capteur optique peut comporter une pluralité d'émetteurs, chacun apte à émettre un faisceau lumineux, notamment infra-rouge, destiné à traverser le flacon en un point donné, et une pluralité de capteurs, chacun agencé pour recevoir un faisceau lumineux émis par l'un des émetteurs auquel il est associé. Par exemple, chaque émetteur et chaque capteur associé peuvent être agencés de part et d'autre du logement, en se faisant face, et les différentes paires d'émetteur-capteur peuvent être agencées à différents niveaux les uns par rapport aux autres. Chaque paire de capteur-émetteur définit ainsi un seuil, pour lequel l'unité de traitement peut déterminer si le niveau de liquide est en-dessous ou au-dessus. Il est ainsi d'estimer le niveau de remplissage du flacon.

De préférence, l'unité d'acquisition comporte un module de contrôle agencé pour déclencher périodiquement l'émission, par l'émetteur, dudit faisceau lumineux infrarouge.

Dans un mode de réalisation alternatif qui ne fait pas partie de l'invention comme revendiquée, le capteur optique est agencé pour acquérir une image du flacon et l'unité de traitement est agencée pour déterminer un niveau de remplissage du flacon à partir de ladite image.

Par exemple, le capteur optique peut être une caméra.

Avantageusement, l'unité d'acquisition comporte une source de lumière apte à éclairer le flacon lorsque l'unité d'acquisition est montée sur le diffuseur.

Dans un mode de réalisation de l'invention, l'unité de traitement est agencée pour sélectionner, à partir de l'image acquise par le capteur optique, un niveau de remplissage du flacon parmi un ensemble de niveaux de remplissage prédéterminés. Par exemple, les niveaux de remplissage prédéterminés peuvent être échelonnés entre un niveau dit « vide » et un niveau dit « plein ». Si on le souhaite, l'unité de traitement est agencée pour mettre en œuvre des opérations de prétraitement de l'image acquise par le capteur optique, et notamment des opérations de redimensionnement, de sous-échantillonnage et/ou de conversion en noir et blanc. De préférence, l'unité de traitement peut être agencée pour déterminer, à partir de l'image acquise par le capteur optique, un état du flacon, par exemple un état « mal positionné », ou l'absence d'un flacon.

Avantageusement, l'unité de traitement est agencée pour mettre en œuvre un classifieur apte à classifier l'image acquise par le capteur optique à partir d'une base de connaissances comportant plusieurs classes comprenant chacune l'un des niveaux de remplissage dudit ensemble représenté par une étiquette, le classifieur ayant été entrainé au moyen d'un algorithme d'apprentissage automatique.

On appelle classifieur un programme informatique dont le rôle est de décider à quelle classe appartient un nouvel objet fourni en entrée, en fonction des informations apprises. La classe d'appartenance est déterminée par application des règles de décision (autrement appelées base de connaissances) qui ont elles-mêmes été préalablement apprises sur des données d'apprentissage.

La phase d'apprentissage automatique consiste à scinder (ou séparer) l'espace de représentation grâce à des frontières et à assigner des étiquettes de classe aux régions ainsi formées. L'élaboration de la base de connaissances, c'est-à-dire l'apprentissage automatique des classifieurs, consiste donc à rechercher ces frontières de décision. La région où se trouve un vecteur de caractéristiques détermine sa classe d'appartenance. Par exemple, l'algorithme d'apprentissage automatique pourra consister à fournir au préalable un jeu d'images de flacons présentant différents états de remplissage et à entrainer le classifieur à assigner à chaque image une étiquette représentant l'un des niveaux de remplissage puis à lui indiquer le niveau de remplissage réel de cette image, de sorte que le classifieur définisse par lui-même les frontières de décision optimales pour ce jeu d'images.

A titre non limitatif, le classifieur pourra être l'un ou plusieurs ou une combinaison des classifieurs suivants : un réseau de neurones, un arbre de décision, un support vecteur/machine, un algorithme de partitionnement ou de regroupement de données. Toujours de façon non limitative, on pourra entrainer le classifieur à l'aide d'un algorithme d'apprentissage automatique de type supervisé, non supervisé, semi-supervisé, par renforcement ou par transfert.

En variante, l'unité de traitement pourra être agencée pour déterminer, à partir de l'image acquise par le capteur optique, une valeur d'un niveau de remplissage du flacon. Le cas échéant, l'unité de traitement pourra être agencée pour mettre en œuvre un algorithme de traitement d'image ou un régresseur apte à prédire une valeur de niveau de remplissage à partir de l'image acquise par le capteur optique et en fonction d'un modèle de niveau de remplissage préalablement établi au moyen d'un algorithme d'apprentissage automatique.

Dans un mode de réalisation préférentiel de l'invention, l'unité d'acquisition comporte un boîtier définissant un logement destiné à recevoir, au moins partiellement, le flacon et comprenant un organe de fixation du boîtier au diffuseur. Par exemple, l'organe de fixation peut être un organe de fixation du boîtier au flacon ou en variante un organe de fixation du boîtier à une autre partie du diffuseur, notamment la fiche électrique mâle ou l'organe de diffusion. Le cas échéant, le capteur optique peut être agencé dans le boîtier de sorte à venir en vis-à-vis d'une paroi latérale du flacon lorsque le flacon est reçu dans le logement.

Par exemple, le boîtier peut être pourvu d'une ouverture au travers de laquelle le flacon peut être inséré dans le logement, le rebord de l'ouverture étant déformable élastiquement de sorte que le flacon puisse être inséré dans le logement en déformant ce rebord, lequel s'oppose alors au retrait du flacon depuis le logement. L'unité d'acquisition forme ainsi un module indépendant du diffuseur, que l'on vient monter sur le diffuseur, sans qu'il ne soit nécessaire de modifier le flacon. De préférence, le logement est destiné à accueillir une partie inférieure du flacon opposée à une partie supérieure laquelle est montée sur l'organe de diffusion du diffuseur. Si on le souhaite, le boîtier peut par exemple présenter une forme d'anneau, le flacon étant ainsi enserré entre cet anneau et l'organe de diffusion.

En variante, le rebord de l'ouverture étant pourvu d'une ou plusieurs pattes élastiquement déformables formant l'organe de fixation. En d'autres termes, les pattes permettent l'insertion du flacon dans le logement et s'opposent à un retrait du flacon depuis ce logement.

Avantageusement, le boîtier comporte une paroi périphérique délimitant latéralement le logement, ladite paroi périphérique comprenant un jour latéral, le capteur optique étant agencé en vis-à-vis de ce jour.

Par exemple, le logement du boîtier destiné à recevoir le flacon est défini par la paroi latérale, dont un rebord définit l'ouverture, et une paroi de fond opposée à l'ouverture et fermant le logement. Le boîtier de l'unité d'acquisition peut comporter un compartiment, formé au droit de la paroi de fond ou en variante formé par la paroi périphérique, et dans lequel est agencée une carte de circuit électronique, sur laquelle est monté le capteur optique.

Si on le souhaite, le boîtier peut comporter une cavité s'étendant à partir du jour et le capteur optique peut être agencé dans cette cavité. Le cas échéant, le capteur optique est monté sur la carte de circuit électronique au moyen d'un connecteur, notamment une carte de circuit imprimé flexible, de sorte à venir dans ladite cavité. Si on le souhaite, la cavité peut présenter une forme s'évasant depuis le capteur optique vers le jour latéral.

Par exemple, la source de lumière apte à éclairer le flacon peut être agencée de sorte à émettre de la lumière vers une paroi de fond du flacon lorsque le flacon est reçu dans le logement. Par exemple, le flacon peut être destiné à être inséré dans le logement de sorte que sa paroi de fond vienne en vis-à-vis de la paroi de fond du logement, la paroi de fond du logement étant percée d'un orifice, et la source de lumière étant montée sur la carte de circuit imprimé au droit de cet orifice. Si on le souhaite, la source de lumière peut être une diode électroluminescente

Avantageusement, le système de détection peut comporter une source d'énergie électrique, notamment une batterie, des accumulateurs ou des piles, voire une cellule photoélectrique. Le cas échéant, ladite source d'énergie électrique est agencée dans le compartiment du boîtier de l'unité d'acquisition.

Dans un autre mode de réalisation de l'invention, l'unité d'acquisition peut être intégrée au diffuseur. Par exemple, le diffuseur peut comporter un boîtier définissant un logement destiné à recevoir, au moins partiellement, le flacon, et le capteur optique de l'unité d'acquisition est agencé dans ce boîtier.

Dans un mode de réalisation préférentiel de l'invention, l'unité de traitement et l'unité de communication sont intégrées dans l'unité d'acquisition, par exemple en étant agencées dans le boîtier, et notamment sur la carte de circuit électronique agencée dans le compartiment du boîtier.

Le cas échéant, l'unité d'acquisition peut comporter un module de transmission sans-fil agencé pour transmettre ladite notification à l'appareil électronique distant. Selon un exemple, le module de transmission sans-fil est un module apte à transmettre des données selon un protocole de communication sans-fil, notamment un protocole Wifi ou de préférence un protocole de type Bluetooth, voire de type Bluetooth Low Energy. De préférence, l'unité d'acquisition peut comporter un module de contrôle du module de transmission sans-fil, le module de contrôle étant agencé pour, lors d'une détection opérée par l'unité de traitement, déclencher la transmission de ladite notification à l'appareil électronique distant.

Dans un mode de réalisation alternatif de l'invention, l'unité de traitement est distante de l'unité d'acquisition. Par exemple, l'unité de traitement fait partie d'un serveur de traitement de données. Le cas échéant, l'unité d'acquisition peut comporter un module de contrôle du module de transmission sans-fil, le module de contrôle étant agencé pour, lors de l'acquisition d'une image par le capteur optique, déclencher la transmission de l'image par le module de transmission à l'unité de traitement.

Avantageusement, l'unité d'acquisition peut comporter au moins un capteur agencé pour acquérir au moins une information relative à l'environnement du diffuseur. Il peut par exemple s'agir d'un capteur de température ambiante, d'un capteur d'humidité, d'un capteur de pression de l'air. Il est ainsi possible de récolter des données sur la qualité de l'air dans la pièce où est installé le diffuseur.

Avantageusement, l'unité d'acquisition comporte un capteur de champ magnétique apte à détecter un champ magnétique émis par une étiquette, notamment aimantée, apposée sur le flacon. Le cas échéant, le capteur de champ magnétique peut être agencé sous le logement destiné à recevoir le flacon, par exemple en étant monté sur la carte de circuit électronique. On comprend ainsi que le capteur de champ magnétique permet de détecter la présence ou l'absence d'un flacon dans le logement. De façon non limitative, le capteur de champ magnétique pourra être un capteur à effet Hall. Si on le souhaite, ledit capteur de champ magnétique peut être un capteur de type NFC ou RFID apte à obtenir des informations d'identification d'une radio-étiquette ou tag RFID ou NFC.

Avantageusement, le module de contrôle peut être agencé pour, en l'absence d'une détection d'un champ magnétique par le capteur de champ magnétique, désactiver le module de transmission sans-fil. Le module de transmission sans-fil étant particulièrement consommateur d'énergie, on s'assure ainsi de transmettre les images acquises par le capteur optique uniquement lorsque c'est nécessaire. De façon alternative ou cumulative, le module de contrôle peut être agencé pour, en l'absence de réception d'une information identifiant le flacon comme étant d'un type donné, désactiver le module de transmission sans-fil.

De préférence, l'unité de communication peut être agencée pour transmettre une notification audit appareil électronique distant uniquement lors d'une détection par l'unité de traitement d'un niveau de remplissage du flacon inférieur audit seuil prédéterminé. En variante, l'unité de communication peut être agencée pour transmettre, de façon périodique, une notification audit appareil électronique distant, ladite notification contenant le résultat de la comparaison par l'unité de traitement du niveau de remplissage du flacon inférieur audit seuil prédéterminé.

Dans un mode de réalisation de l'invention, l'unité de communication peut être agencée pour transmettre une notification de remplissage audit appareil électronique distant en fonction du niveau de remplissage déterminé, et notamment contenant le niveau de remplissage déterminé. Avantageusement, l'unité de communication peut être agencée pour transmettre une notification audit appareil électronique distant indiquant la nécessité de remplacer le flacon lorsque le niveau de remplissage déterminé est en dessous dudit seuil prédéterminé, par exemple lorsque le niveau de remplissage déterminé correspond au niveau dit « vide ». Avantageusement toujours, l'unité de communication peut être agencée pour transmettre une notification audit appareil électronique distant prévoyant le remplacement imminent du flacon lorsque le niveau de remplissage déterminé est en dessous d'un deuxième seuil prédéterminé supérieur au premier seuil, par exemple lorsque le niveau de remplissage déterminé correspond à un niveau intermédiaire entre le niveau « vide » et le niveau plein. Si on le souhaite, l'unité de traitement peut être agencée pour prédire une durée de fin de vie du flacon installé dans le diffuseur, par exemple au moyen des états de remplissage de ce flacon, déterminés précédemment, et l'unité de communication peut être agencée pour transmettre une notification audit appareil électronique distant contenant cette durée prédite.

De préférence, l'unité de communication peut être agencée pour transmettre une notification audit appareil électronique distant contenant le niveau de charge de la source d'énergie électrique de l'unité d'acquisition et éventuellement des informations issues des autres capteurs de l'unité d'acquisition.

L'invention a également pour objet une unité d'acquisition d'un système de détection d'un état de remplissage d'un flacon d'un diffuseur selon l'invention.

L'invention a également pour objet un ensemble d'un diffuseur de produit, le diffuseur comportant un flacon contenant ledit produit, et d'une unité d'acquisition selon l'invention. Le cas échéant, l'unité d'acquisition peut être montée sur le diffuseur, notamment sur le flacon. En variante, l'unité d'acquisition peut être intégrée au diffuseur.

L'invention a également pour objet un système de détection d'un flacon d'un diffuseur, le flacon contenant un produit destiné à être diffusé, le système comportant une unité d'acquisition comprenant un boîtier définissant un logement destiné à recevoir, au moins partiellement, le flacon, caractérisé en ce que l'unité d'acquisition comporte un capteur de champ magnétique apte à détecter un champ magnétique émis par une étiquette, notamment aimantée, apposée sur le flacon, lorsque le flacon est reçu dans le logement. Le cas échéant, le boîtier peut comprendre un organe de fixation du boîtier au diffuseur.

Avantageusement, l'unité d'acquisition est pourvue d'un capteur optique agencé pour acquérir une image du flacon et le système de détection comporte une unité de traitement agencée pour déterminer un niveau de remplissage du flacon à partir de ladite image et une unité de communication agencée pour transmettre une notification de remplissage à un appareil électronique distant en fonction du niveau de remplissage déterminé.

La présente invention est maintenant décrite à l'aide d'exemples uniquement illustratifs et nullement limitatifs de la portée de l'invention, et à partir des illustrations jointes, dans lesquelles :
[Fig. 1] représente, schématiquement et partiellement, une vue d'un système de détection d'un état de remplissage d'un flacon d'un diffuseur selon un premier mode de réalisation de l'invention ;
[Fig. 2] représente, schématiquement et partiellement, une vue en éclaté du diffuseur et de l'unité d'acquisition du système de la [Fig. 1] ;
[Fig. 3] représente, schématiquement et partiellement, une vue en coupe de l'unité d'acquisition montée sur le diffuseur de la [Fig. 2] ;
[Fig. 4] représente, schématiquement et partiellement, une vue d'un système de détection d'un état de remplissage d'un flacon d'un diffuseur selon un deuxième mode de réalisation de l'invention ;
[Fig. 5] représente, schématiquement et partiellement, une vue en éclaté du diffuseur et de l'unité d'acquisition du système de la [Fig. 4] ;
[Fig. 6] représente, schématiquement et partiellement, une vue en perspective de l'unité d'acquisition de la [Fig. 5] ;

Dans la description qui suit, les éléments identiques, par structure ou par fonction, apparaissant sur différentes figures conservent, sauf précision contraire, les mêmes références. En outre, les termes « avant », « arrière », « haut », « bas », « inférieur » et « supérieur » doivent être interprétés dans le contexte de l'orientation de l'unité d'acquisition telle qu'elle a été représentée, correspondant à une utilisation normale du système de détection, comme par exemple lorsqu'elle est montée sur un diffuseur électrique enfiché dans un socle électrique mural femelle.

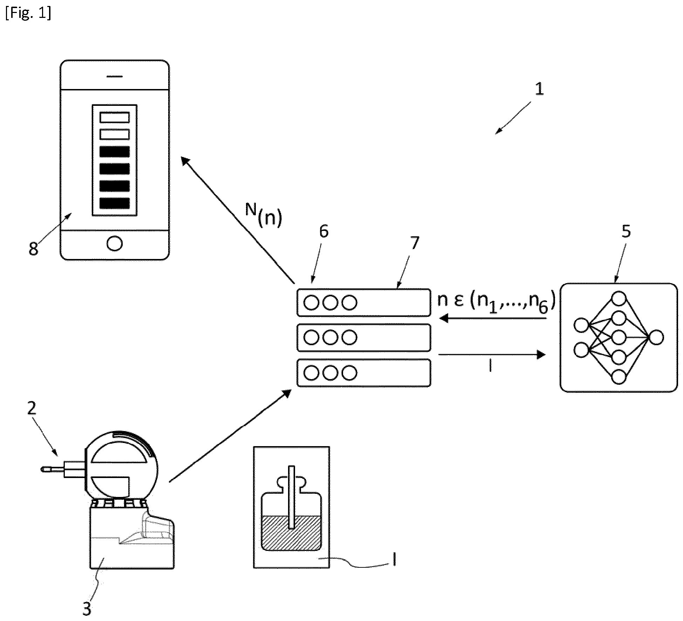

On a représenté en [Fig. 1] un système 1 de détection d'un état de remplissage d'un flacon d'un diffuseur 2 selon un premier mode de réalisation de l'invention, le flacon contenant une quantité d'un produit destiné à être diffusé.

Dans l'exemple décrit, sans que cela soit limitatif, le flacon contient un produit consistant en une composition à base de phéromones comprenant au moins un solvant porteur et de préférence un mélange d'acides gras, et/ou de dérivés, par exemple commercialisée par la société Ceva Santé Animal sous la marque Feliway ^{®} . Cette composition à base de phéromones est susceptible d'être administrée à des mammifères non humains, notamment des félidés, par diffusion dans l'air ambiant, pour le traitement de symptômes liés aux stress ou à l'anxiété desdits mammifères non humains.

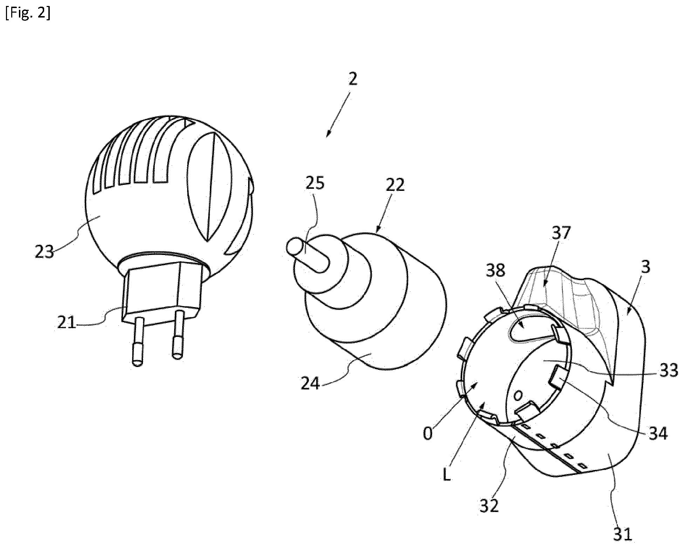

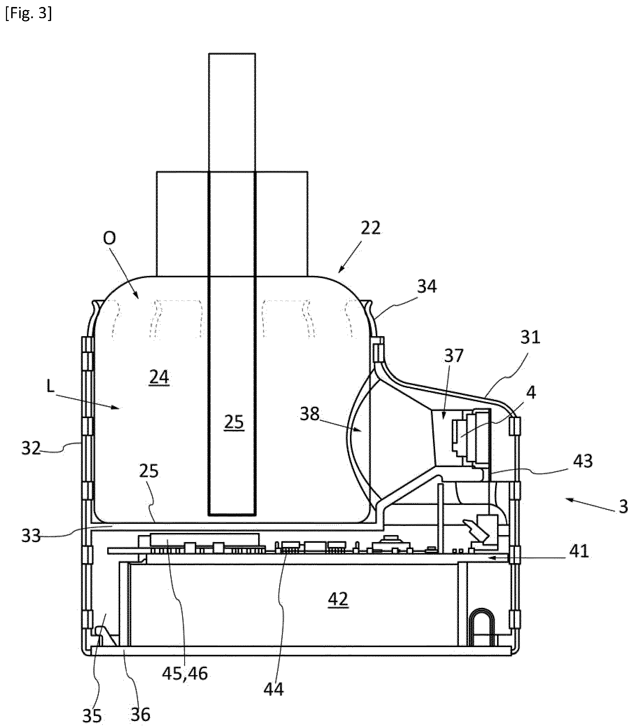

Le système 1 comporte une unité d'acquisition 3 destinée à être montée sur le diffuseur 2. On a représenté en [Fig. 2] une vue en éclaté du diffuseur 2 et de l'unité d'acquisition 3 et en [Fig. 3] une vue en coupe du diffuseur 2 sur lequel est montée l'unité d'acquisition 3.

Dans l'exemple décrit, sans que cela soit limitatif, le diffuseur 2 est un diffuseur électrique, comportant une fiche électrique mâle 21 destinée à coopérer avec un socle électrique mural femelle, un organe de diffusion 23 et un flacon 22, monté sur l'organe de diffusion de façon démontable, contenant le produit destiné à être diffusé.

Le flacon 22 comporte un corps 24 avec une paroi de fond 25, et une mèche 26 agencée dans le flacon en étant plongée dans le produit pour le faire remonter, par capillarité, vers l'organe de diffusion 23 du diffuseur 2. L'organe de diffusion 23 comporte une résistance chauffante (non représentée), agencée pour chauffer lorsqu'elle est alimentée électriquement et ainsi diffuser le produit contenu dans le flacon par évaporation.

L'unité d'acquisition 3 comporte un boîtier 31 définissant un logement L destiné à recevoir le flacon 22. Ce logement L est défini par une paroi latérale 32 sensiblement cylindrique du boîtier 31, ouverte sur le dessus, et fermée sur le dessous par une paroi de fond 33. Le rebord supérieur de la paroi latérale 32 définit ainsi une ouverture O au travers de laquelle le flacon 22 peut être inséré dans le logement L. Lors d'une insertion normale du flacon 22 dans le logement L, le corps 24 du flacon est entouré par la paroi latérale 32 et la paroi de fond 25 du flacon vient en vis-à-vis de la paroi de fond 33 du logement L.

Le rebord de la paroi latérale 32 comporte une pluralité de pattes élastiquement déformables 34, réparties sur son pourtour et formant ensemble un organe de fixation de l'unité d'acquisition 3 sur le diffuseur 2. En d'autres termes, les pattes 33 permettent l'insertion du flacon 22 dans le logement L. En revanche, une fois le flacon 22 inséré, les pattes 33 s'opposent au retrait du flacon 22 hors du logement, de sorte qu'un effort doit être exercé sur le flacon 22 pour permettre ce retrait.

Le boîtier 31 comporte un compartiment 35, agencé sous la paroi de fond 33 du logement L, et dans lequel sont agencées une carte de circuit électronique 41 et des piles 42 connectées électriquement à la carte 41. Un capot amovible 36 ferme le compartiment 34.

La carte de circuit électronique 41 supporte un capteur optique 4, à savoir, dans l'exemple décrit, une caméra 4. La caméra 4 est agencée dans une cavité 37 du boîtier, en étant reliée à la carte de circuit électronique 41 par un connecteur 43, à savoir dans l'exemple décrit une carte de circuit imprimé flexible.

La cavité 37 s'étend au droit de la paroi latérale 32, en s'évasant vers un jour latéral 38 formé dans cette paroi latérale 32. Ainsi, dans cette position, la caméra 4 peut acquérir une image du diffuseur 2 au niveau d'une position correspondant à la position du flacon 22.

La carte de circuit électronique 41 supporte également une source de lumière 44, à savoir, dans l'exemple décrit, une diode électroluminescente 44. La paroi de fond 33 est percée d'un orifice 37 et la diode électroluminescente 44 est montée sur la carte 41 en dessous de cet orifice 37. De la sorte, la diode électroluminescente 44 peut éclairer le flacon 22 par le dessous, au travers de sa paroi de fond 25, afin de faciliter l'acquisition d'images de bonne qualité par la caméra 4.

La carte de circuit électronique 41 supporte également un module de contrôle 45, intégrant un module de transmission sans-fil 46. Dans l'exemple décrit, le module de transmission sans-fil 46 est un module apte à transmettre des données selon un protocole de communication sans-fil, notamment un protocole Wifi. Le module de contrôle 45 contrôle les différents éléments de l'unité d'acquisition 3, et en particulier la caméra 4 et le module de transmission sans-fil. Plus précisément, le module de contrôle 45 est agencé pour déclencher l'acquisition d'une image par la caméra 4 de façon périodique, par exemple une fois par jour.

La carte de circuit électronique 41 supporte également une pluralité de capteurs, dont des capteurs susceptibles d'acquérir des informations relatives à l'environnement du diffuseur 2, et notamment un capteur de température ambiante, et un capteur à effet Hall. Dans l'exemple décrit, les différents capteurs sont intégrés dans le module de contrôle 45.

Le flacon 22 peut comporter une étiquette aimantée, apposée par exemple sur une face extérieure de sa paroi de fond 25. Le capteur à effet Hall étant intégré dans le module de contrôle 45, il est ainsi placé sous le logement L et peut ainsi détecter un champ magnétique émis par cette étiquette. On comprend ainsi que ce capteur à effet Hall permet de détecter la présence ou l'absence d'un flacon dans le logement L. En l'absence de détection d'un flacon dans le logement L par le capteur à effet Hall, le module de contrôle 45 peut alors désactiver le module de transmission sans-fil 46, de sorte à minimiser la consommation d'énergie de l'unité d'acquisition 3.

La suite du système 1 va maintenant être décrite, en liaison de nouveau avec la [Fig. 1].

Le système 1 comporte une unité de traitement 5 et une unité de communication 6. Dans l'exemple décrit, l'unité de traitement 5 et l'unité de communication 6 sont intégrées dans un serveur de traitement de données 7, distant de l'unité d'acquisition 3.

Au cours de l'utilisation, par un utilisateur, du diffuseur 2 sur lequel est montée l'unité d'acquisition 3, chaque image I acquise par la caméra 4 est transmise, par le module de transmission sans-fil 46, au serveur 7.

Cette image Im est transmise à l'unité de traitement 5, et subit plusieurs opérations de prétraitement, notamment des opérations de redimensionnement, de sous-échantillonnage et/ou de conversion en noir et blanc, permettant de simplifier le traitement de cette image Im.

L'unité de traitement 5 est agencée pour sélectionner, à partir de l'image I, un niveau de remplissage du flacon n parmi un ensemble de niveaux de remplissage prédéterminés {n₁, ..., nₘ}. Dans l'exemple décrit, l'ensemble comporte sept niveaux de remplissage n₁ à n₆ échelonnés entre un niveau n₁ dit « vide » et un niveau n₆ dit « plein ». Il est à relever que l'unité de traitement 5 peut également déterminer, à partir de l'image I, si le flacon 22 du diffuseur 2 est mal positionné, ou encore si le diffuseur 22 ne comporte aucun flacon.

A ces fins, l'unité de traitement 5 met en œuvre un classifieur apte à classifier l'image I à partir d'une base de connaissances comportant plusieurs classes comprenant chacune l'un des niveaux de remplissage n₁ à n₆ dudit ensemble ainsi que les états « mal positionné » ou « absent », chaque classe étant représentée par une étiquette.

Dans l'exemple décrit, le classifieur est un réseau de neurones ayant été entrainé au préalable au moyen d'un algorithme d'apprentissage automatique en mode supervisé. Par exemple, les hyperparamètres du réseau, et notamment les valeurs initiales des poids synaptiques et des valeurs de biais des différents neurones du réseau, ont été établis de façon aléatoire. Un jeu d'images de flacons présentant différents états de remplissage connus à l'avance a ensuite été fourni au classifieur, le classifieur ayant été entrainé à assigner à chaque image une étiquette représentant l'un des niveaux de remplissage. Pour chaque image, le niveau de remplissage réel correspondant à cette image a ensuite été fourni au classifieur, de sorte qu'il puisse ajuster les valeurs des poids et des valeurs de biais. De la sorte, le classifieur définit par lui-même des règles de décision optimales pour ce jeu d'images, permettant d'assigner des étiquettes de classe à ces images.

A l'issue des opérations mises en œuvre par l'unité de traitement 5, le niveau de remplissage du flacon n ainsi déterminé est fourni à l'unité de communication 6.

Il est à relever que lors de l'acquisition de l'unité d'acquisition 3 par l'utilisateur, cette unité a été couplée, au niveau du serveur 7, à un téléphone intelligent 8 de l'utilisateur, lequel est équipé d'une application logicielle de suivi de l'état de remplissage du flacon 22.

A la réception du niveau n, l'unité de communication 6 transmet alors une notification N contenant ce niveau n au téléphone intelligent 8. L'application logicielle peut alors indiquer à l'utilisateur la quantité de produit restante dans le flacon 22.

Dans l'exemple décrit, en fonction de la valeur du niveau n, la notification N peut contenir une alerte destinée à être transmise, par le biais de l'application logicielle, à l'utilisateur. Ainsi, si le niveau n sélectionné par l'unité de traitement 5 est un niveau inférieur ou égal à un niveau intermédiaire donné, par exemple un niveau n₂, la notification N peut inclure une requête à destination de l'utilisateur lui demandant de prévoir le remplacement du flacon 22, et lui proposer un lien commercial permettant d'obtenir une recharge. Si le niveau n sélectionné par l'unité de traitement 5 est le niveau n₁, à savoir le niveau « vide », la notification N peut inclure une requête à destination de l'utilisateur lui demandant de remplacer dès que possible le flacon 22.

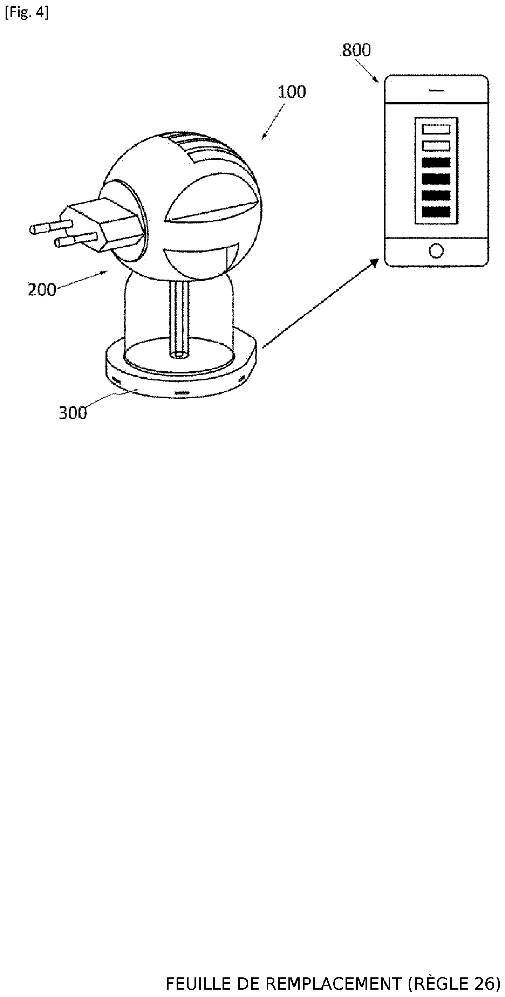

On a représenté en [Fig. 4] un système 100 de détection d'un état de remplissage d'un flacon d'un diffuseur 200 selon un deuxième mode de réalisation de l'invention, le flacon contenant une quantité d'un produit destiné à être diffusé.

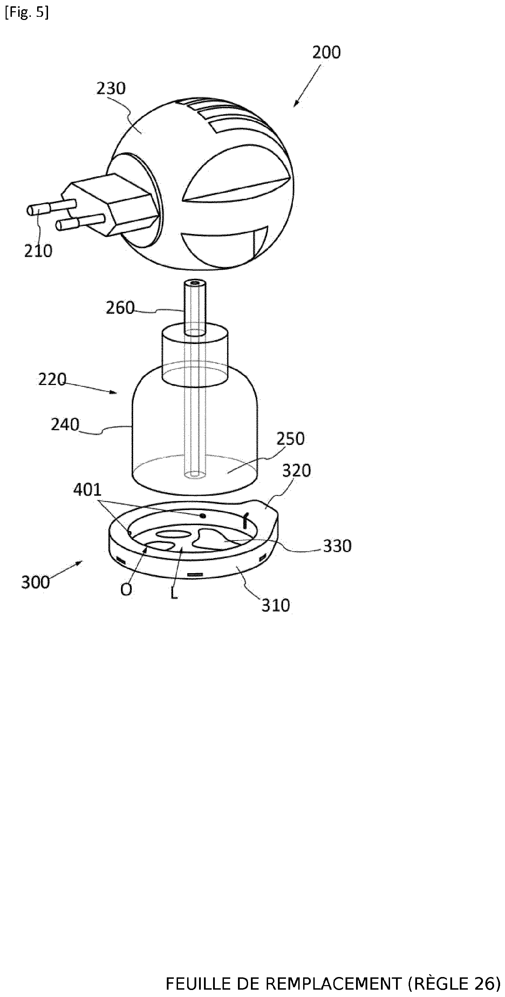

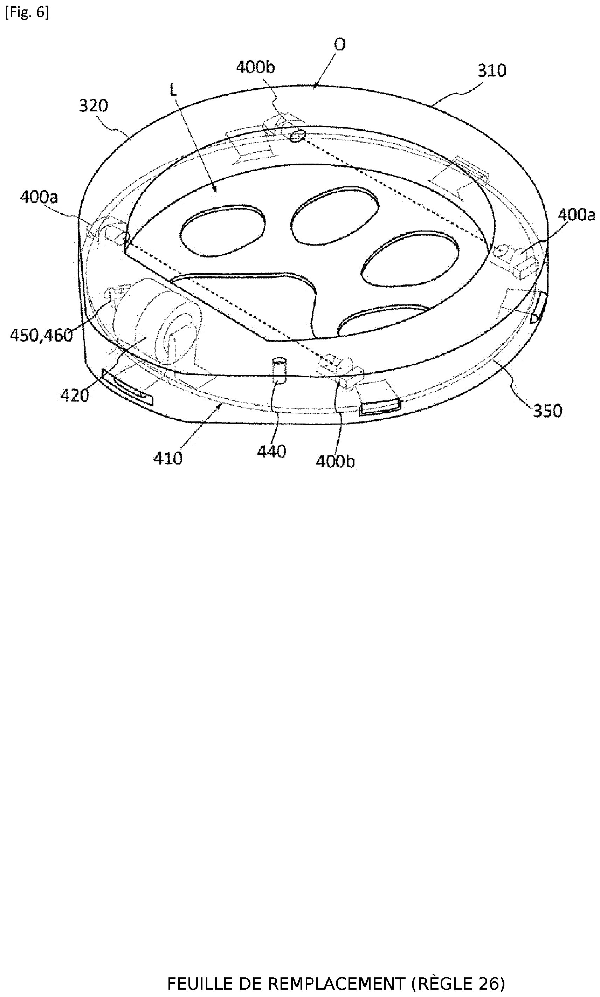

Le système 100 comporte une unité d'acquisition 300 destinée à être montée sur le diffuseur 200. On a représenté en [Fig. 5] une vue en éclaté du diffuseur 200 et de l'unité d'acquisition 300 et en [Fig. 6] une vue en perspective de l'unité d'acquisition 300.

Comme dans l'exemple des [Fig. 1] à [Fig. 3], le diffuseur 200 est un diffuseur électrique, comportant une fiche électrique mâle 210 destinée à coopérer avec un socle électrique mural femelle, un organe de diffusion 230 et un flacon 220, monté sur l'organe de diffusion de façon démontable, contenant le produit destiné à être diffusé.

Le flacon 220 comporte un corps 240 avec une paroi de fond 250, et une mèche 260 agencée dans le flacon en étant plongée dans le produit pour le faire remonter, par capillarité, vers l'organe de diffusion 230 du diffuseur 200. L'organe de diffusion 230 comporte une résistance chauffante (non représentée), agencée pour chauffer lorsqu'elle est alimentée électriquement et ainsi diffuser le produit contenu dans le flacon par évaporation.

L'unité d'acquisition 300 comporte un boîtier 310 définissant un logement L destiné à recevoir le flacon 220. Ce logement L est défini par une paroi latérale 320 formant un anneau, et rapportée sur une paroi de fond 330. Le rebord supérieur de la paroi latérale 320 définit ainsi une ouverture O au travers de laquelle une partie inférieure du flacon 220 peut être insérée dans le logement L. Lors d'une insertion normale du flacon 220 dans le logement L, le corps 240 du flacon est entouré par la paroi latérale 320 et la paroi de fond 250 du flacon vient en vis-à-vis de la paroi de fond 330 du logement L.

Le rebord de la paroi latérale 320 est élastiquement déformables et forme ainsi un organe de fixation de l'unité d'acquisition 300 sur le flacon 220. En d'autres termes, ce rebord se déforme pour permettre l'insertion du flacon 220 dans le logement L. En revanche, une fois le flacon 220 inséré, le rebord s'oppose au retrait du flacon 220 hors du logement, de sorte qu'un effort doit être exercé sur le flacon 220 pour permettre ce retrait.

L'unité d'acquisition 300 forme ainsi un élément indépendant du flacon 220, pouvant être monté et démonté à volonté, notamment pour remplacer ou remplir le flacon 220.

La paroi latérale 320 forme un anneau creux qui définit ainsi un compartiment 350, s'étendant tout autour du logement L, et dans lequel sont agencées une carte de circuit électronique 410 et des piles 420 connectées électriquement à la carte 410.

La carte de circuit électronique 410 supporte deux capteurs optique 400a, à savoir, dans l'exemple décrit, deux phototransistors 400a sensibles à la lumière infrarouge, ainsi que deux émetteurs 400b de lumière infrarouge, consistant dans l'exemple décrit en deux diodes électroluminescentes. Chaque capteur 400a et chaque émetteur 400b est ainsi agencé dans le compartiment 350 en vis-à-vis d'un orifice 401 prévu à cet effet dans une surface de la paroi latérale 320 située du côté du logement L.

Plus précisément, chacun des capteur optique 400a est ainsi disposé en face de l'un des émetteurs 400b. Chaque capteur 400a forme ainsi avec l'émetteur 400b qui lui fait face une paire capteur-émetteur disposée de part et d'autre du logement L, les orifices 401 associés étant en correspondance et le flacon 220 venant alors s'interposer entre le capteur et l'émetteur lorsqu'il est disposé dans le logement L. En d'autres termes, chaque émetteur 400b est agencé pour émettre un faisceau lumineux infrarouge (matérialisé en traits pointillés en [Fig. 6]) au travers du logement L et donc du flacon 220 vers le capteur optique 400a associé.

On notera que du fait de la forme du boîtier 310 et de celle de la paroi latérale 320, les paires de capteur-émetteur sont positionnées à une même hauteur au regard de la paroi de fond 330 du boîtier, de sorte qu'elles sont destinées à venir juste au-dessus de la paroi de fond 250 du flacon 220. Par ailleurs, ces paires capteur-émetteur sont agencées de part et d'autre d'un plan diamétral du logement L.

La carte de circuit électronique 410 supporte également une source de lumière 440, à savoir, dans l'exemple décrit, une diode électroluminescente 440 agencée dans le compartiment 350 et orientée vers l'extérieur du boîtier 310. La paroi latérale 320 est percée d'un orifice au travers duquel la diode électroluminescente 440 peut émettre de la lumière.

La carte de circuit électronique 410 supporte également un module de contrôle 450, intégrant un microcontrôleur, ainsi qu'un module de transmission sans-fil 460. Dans l'exemple décrit, le module de transmission sans-fil 460 est un module apte à transmettre des données directement à un smartphone ou une tablette 800 selon un protocole de communication sans-fil de type Bluetooth Low Energy.

La carte de circuit électronique 410 supporte également une pluralité de capteurs, dont des capteurs susceptibles d'acquérir des informations relatives à l'environnement du diffuseur 2, et notamment un capteur de température ambiante, un capteur à effet Hall et un lecteur de tag NFC. Dans l'exemple décrit, les différents capteurs sont intégrés dans le module de contrôle 450.

Le module de contrôle 450 contrôle les différents éléments de l'unité d'acquisition 300, et en particulier est apte à contrôler les émetteurs 400b et à traiter les données générées par les capteurs 400a, à recevoir des données générées par les autres capteurs, à contrôler la source de lumière 440 et à contrôler l'activation, la désactivation et la transmission de données par le module de transmission sans-fil 460.

De façon équivalente au mode de réalisation des [Fig. 1] à [Fig. 3], le capteur à effet Hall permet de détecter un champ magnétique émis par cette étiquette. On comprend ainsi que ce capteur à effet Hall permet de détecter la présence ou l'absence d'un flacon dans le logement L. En l'absence de détection d'un flacon dans le logement L par le capteur à effet Hall, le module de contrôle 450 peut alors désactiver le module de transmission sans-fil 460, de sorte à minimiser la consommation d'énergie de l'unité d'acquisition 3.

Le lecteur de tag NFC permet d'obtenir des informations d'identification du flacon 220, si ce dernier comporte un tel tag NFC, et ainsi d'authentifier ce flacon 220 afin que le module de contrôle 450 puisse autoriser ou interdire l'accès à l'une ou plusieurs fonctionnalités du système 100, y compris la fonctionnalité de diffusion.

Le fonctionnement du système 100 va maintenant être décrite, en liaison de nouveau avec la [Fig. 4].

Le module de contrôle 450 est agencé pour déclencher l'émission d'un faisceau infrarouge, par chacun des émetteurs 400b, de façon périodique, par exemple toutes les quatre heures.

On notera que si le flacon 220 comporte suffisamment de liquide, le niveau du liquide passe au-dessus du trajet optique normal du faisceau lumineux émis par l'un et/ou l'autre des émetteurs 400b vers les capteurs 400a. Dès lors, l'un et/ou l'autre de ces faisceaux est réfracté par le liquide lorsqu'il traverse le flacon et n'atteint donc pas le capteur optique 400a associé. A contrario, si le niveau du liquide passe en dessous de ce trajet optique normal de l'un ou l'autre de ces faisceaux lumineux, ce faisceau lumineux ne subit donc sensiblement aucune déviation et le capteur optique 400a associé le reçoit. En d'autres termes, le flux de courant circulant entre l'émetteur et le collecteur de chaque phototransistor 400a est donc fonction du niveau de liquide dans le flacon au regard de la position de ce phototransistor. Il est ainsi possible au module de contrôle 450, en comparant les flux de courant des capteurs 400a à un seuil donné, de déterminer si le niveau du liquide est au-dessus ou en dessous de la position de ces capteurs. Plus précisément, si le flux de courant de l'un des capteurs 400a est supérieur audit seuil donné, le module de contrôle 450 peut alors conclure que le flacon 220 est quasiment vide. Si le flux de courant de chacun des capteurs 400a est inférieur audit seuil donné, le module de contrôle 450 peut conclure, à l'inverse, que le flacon 220 contient encore suffisamment de liquide.

On constate ainsi que, quelle que soit l'orientation de la fiche 210 et du flacon 220, au moins l'une des paires de capteur-émetteur pourra permettre la détection de l'état de remplissage du flacon 220. Par ailleurs, a contrario du mode des [Fig. 1] à [Fig. 3], l'ensemble des opérations du système de détection est réalisé au niveau de l'unité d'acquisition 300, et non au niveau d'un serveur informatique distant.

Lors d'une détection, par le microcontrôleur du module de contrôle 450, d'un niveau de liquide insuffisant dans le flacon 220, le module de contrôle 450 contrôle la source de lumière 440 pour l'émission d'un signal lumineux indiquant que le flacon 220 est vide et qu'il est nécessaire de le remplacer ou de le remplir. Simultanément, le module de contrôle 450 contrôle le module de transmission sans-fil 460 pour l'émission d'une notification à destination du téléphone 800 indiquant un état vide du flacon et contenant une instruction de remplissage du flacon.

La description qui précède explique clairement comment l'invention permet d'atteindre les objectifs qu'elle s'est fixée, à savoir proposer un système permettant à un utilisateur d'un diffuseur de pouvoir remplacer le flacon du diffuseur quand il est vide, de pouvoir commander une recharge avant que le flacon soit vide, afin de permettre une utilisation continue du diffuseur, en prévoyant d'ajouter au diffuseur une unité d'acquisition d'une image du flacon, de traiter cette image au moyen d'une unité de traitement pour déterminer la quantité de produit restante dans le flacon, et de notifier cette quantité à cet utilisateur.

En tout état de cause, l'invention ne saurait se limiter aux modes de réalisation spécifiquement décrits dans ce document. On pourra en particulier envisager d'équiper d'autres types de diffuseurs que celui décrit, et notamment des diffuseurs à ultrasons, voire des diffuseurs non électriques, ou encore des diffuseurs associés à d'autres types de produits que les compositions à base de phéromones, et notamment des diffuseurs d'insecticide, de répulsif à insecte, de désinfectant, d'antiseptique, d'inhibiteur de moisissure, de parfum, d'huile essentielle, d'éliminateur d'odeur ou de désodorisant. On pourra également prévoir d'intégrer l'unité d'acquisition dans le diffuseur. On pourrait également prévoir d'autres solutions permettant à l'unité de traitement de déterminer un niveau de remplissage du flacon que celle citée, et notamment d'autres types de classifieurs, voire un régresseur ou encore un algorithme de traitement d'image. On pourra également envisager d'utiliser d'autres types de capteurs optiques que celui décrit, et notamment un capteur à base d'émetteur-récepteur opérant dans une autre longueur d'onde que l'infra-rouge. L'invention est limitée aux spécifications divulguées dans les revendications suivantes.

## Revendications

1. Système (1, 100) de détection d'un état de remplissage d'un flacon (22, 220) d'un diffuseur (2, 200), le flacon contenant un produit destiné à être diffusé, le système comportant une unité d'acquisition (3, 300) selon la revendication 9, une unité de traitement (5, 450) agencée pour détecter, à partir dudit faisceau lumineux, si un niveau de remplissage (n) du flacon est inférieur à un seuil prédéterminé et une unité de communication (6, 460) agencée pour transmettre une notification (N) relative audit niveau de remplissage à un appareil électronique distant (8, 800) en fonction de ladite détection ; l'unité de traitement (450) est agencée pour déterminer que le niveau de remplissage du flacon est inférieur audit seuil prédéterminé lorsque l'un des capteurs optiques reçoit l'un desdits faisceaux lumineux infrarouge.

2. Système (100) de détection selon la revendication précédente, dans lequel l'émetteur (400a) de lumière infrarouge et le capteur (400b) de lumière infrarouge sont destinés à être disposés en vis-à-vis d'une paroi latérale du flacon (220) et au droit d'une paroi inférieure (250) du flacon.

3. Système (1,100) de détection selon l'une des revendications précédentes, l'unité d'acquisition comportant un boîtier (31, 310) définissant un logement (L) destiné à recevoir, au moins partiellement, le flacon (22, 220) et comprenant un organe de fixation (34, 320) du boîtier au diffuseur (2, 200), le capteur optique (4, 400b) étant agencé dans le boîtier de sorte à venir en vis-à-vis d'une paroi latérale du flacon lorsque le flacon est reçu dans le logement.

4. Système (1, 100) de détection selon la revendication précédente, dans lequel le boîtier (31, 310) comporte une paroi périphérique (32, 320) délimitant latéralement le logement (L), ladite paroi périphérique comprenant un jour latéral (38, 401), le capteur optique (4, 400b) étant agencé dans le boîtier en vis-à-vis de ce jour.

5. Système (100) de détection selon la revendication précédente, dans lequel l'unité de traitement (450) et l'unité de communication (460) sont intégrées dans l'unité d'acquisition (300).

6. Système (1,100) de détection selon l'une des revendications précédentes, dans lequel l'unité d'acquisition (3, 300) comporte au moins un capteur agencé pour acquérir au moins une information relative à l'environnement du diffuseur (2, 200).

7. Système (1, 100) de détection selon l'une des revendications précédentes, dans lequel l'unité d'acquisition (3, 300) comporte un capteur de champ magnétique apte à détecter un champ magnétique émis par une étiquette apposée sur le flacon (22, 220).

8. Système (1, 100) de détection selon la revendication précédente, dans lequel l'unité d'acquisition (3, 300) comporte un module de contrôle (45, 450) de l'unité de communication (46, 460), le module de contrôle étant agencé pour, en l'absence d'une détection d'un champ magnétique par le capteur de champ magnétique, désactiver l'unité de communication.

9. Unité d'acquisition (3, 300) d'un système (1, 100) de détection d'un état de remplissage d'un flacon (22, 220) d'un diffuseur (2, 200),
l'unité d'acquisition (3, 300) est pourvue d'au moins un capteur optique (4, 400b) destiné à être disposé en vis-à-vis du flacon pour acquérir au moins un faisceau lumineux ayant traversé le flacon,
**caractérisée en ce que**
l'unité d'acquisition (300) comporte deux capteurs (400b) de lumière infrarouge destinés à être disposés en vis-à-vis du flacon (220) en deux endroits différents, à une même hauteur, et deux émetteurs (400a) de lumière infrarouge destinés chacun à être disposé en vis-à-vis du flacon en face de l'un des capteurs de lumière infrarouge et agencé pour émettre au moins un faisceau lumineux infrarouge au travers du flacon vers ce capteur optique.

10. Ensemble d'un diffuseur (2, 200) de produit, le diffuseur comportant un flacon (22, 220) contenant ledit produit, et d'une unité d'acquisition (3, 300) selon la revendication précédente.

## Patentansprüche

1. System (1, 100) zur Detektion eines Füllzustands eines Fläschchens (22, 220) eines Diffusors (2, 200), wobei das Fläschchen ein zu diffundierendes Produkt enthält, wobei das System eine Erfassungseinheit (3, 300) nach Anspruch 9 aufweist, eine Verarbeitungseinheit (5, 450), die dazu eingerichtet ist, ausgehend von dem Lichtstrahl zu detektieren, ob ein Füllstand (n) des Fläschchens niedriger ist als ein vorgegebener Schwellenwert, und eine Kommunikationseinheit (6, 460), die dazu eingerichtet ist, entsprechend dieser Detektion eine Meldung (N) über den Füllstand an ein entferntes elektronisches Gerät (8, 800) zu senden; wobei die Verarbeitungseinheit (450) dazu eingerichtet ist, zu bestimmen, dass der Füllstand des Fläschchens unter dem vorgegebenen Schwellenwert liegt, wenn einer der optischen Sensoren einen der Infrarotlichtstrahlen empfängt.

2. Detektionssystem (100) nach dem vorstehenden Anspruch, wobei der Infrarotlichtsender (400a) und der Infrarotlichtsensor (400b) dazu bestimmt sind, gegenüber einer Seitenwand des Fläschchens (220) und in einer Linie mit einer unteren Wand (250) des Fläschchens angeordnet zu werden.

3. Detektionssystem (1, 100) nach einem der vorstehenden Ansprüche, wobei die Erfassungseinheit ein Gehäuse (31, 310) aufweist, das eine Aufnahme (L) definiert, die dazu bestimmt ist, das Fläschchen (22, 220) zumindest teilweise aufzunehmen, und ein Befestigungselement (34, 320) des Gehäuses am Diffusor (2, 200) umfasst, wobei der optische Sensor (4, 400b) so im Gehäuse eingerichtet ist, dass er einer Seitenwand des Fläschchens gegenüberliegt, wenn das Fläschchen in der Aufnahme aufgenommen ist.

4. Detektionssystem (1, 100) nach dem vorstehenden Anspruch, wobei das Gehäuse (31, 310) eine die Aufnahme (L) seitlich begrenzende Umfangswand (32, 320) aufweist, wobei die Umfangswand eine seitliche Öffnung (38, 401) umfasst, wobei der optische Sensor (4, 400b) gegenüber dieser Öffnung im Gehäuse eingerichtet ist.

5. Detektionssystem (100) nach dem vorstehenden Anspruch, wobei die Verarbeitungseinheit (450) und die Kommunikationseinheit (460) in die Erfassungseinheit (300) integriert sind.

6. Detektionssystem (1, 100) nach einem der vorstehenden Ansprüche, wobei die Erfassungseinheit (3, 300) mindestens einen Sensor aufweist, der dazu eingerichtet ist, mindestens eine Information über die Umgebung des Diffusors (2, 200) zu erfassen.

7. Detektionssystem (1, 100) nach einem der vorstehenden Ansprüche, wobei die Erfassungseinheit (3, 300) einen Magnetfeldsensor aufweist, der in der Lage ist, ein von einem am Fläschchen (22, 220) angebrachten Etikett emittiertes Magnetfeld zu erkennen.

8. Detektionssystem (1, 100) nach dem vorstehenden Anspruch, wobei die Erfassungseinheit (3, 300) ein Steuermodul (45, 450) der Kommunikationseinheit (46, 460) aufweist, wobei das Steuermodul dazu eingerichtet ist, die Kommunikationseinheit zu deaktivieren, wenn der Magnetfeldsensor kein Magnetfeld detektiert.

9. Erfassungseinheit (3, 300) eines Systems (1, 100) zum Detektieren eines Füllzustands eines Fläschchens (22, 220) eines Diffusors (2, 200), wobei die Erfassungseinheit (3, 300) mit mindestens einem optischen Sensor (4, 400b) ausgestattet ist, der gegenüber dem Fläschchen angeordnet werden soll, um mindestens einen Lichtstrahl zu erfassen, der das Fläschchen durchdrungen hat, **dadurch gekennzeichnet, dass** die Erfassungseinheit (300) zwei Infrarotlichtsensoren (400b) aufweist, die gegenüber dem Fläschchen (220) an zwei verschiedenen Stellen auf gleicher Höhe angeordnet werden sollen, und zwei Infrarotlichtsender (400a), die jeweils gegenüber dem Fläschchen gegenüber einem der Infrarotlichtsensoren angeordnet werden sollen und so eingerichtet sind, dass sie mindestens einen Infrarotlichtstrahl durch das Fläschchen in Richtung dieses optischen Sensors aussenden.

10. Baugruppe aus einem Produktdiffusor (2, 200), wobei der Diffusor ein Fläschchen (22, 220), das das Produkt enthält, und eine Erfassungseinheit (3, 300) nach dem vorstehenden Anspruch umfasst.

## Claims

1. A system (1, 100) for detecting the state of filling of a bottle (22, 220) of a diffuser (2, 200), the bottle containing a product to be diffused, the system comprising an acquisition unit (3, 300) according to claim 9, a processing unit (5, 450) arranged to detect, from said light beam, whether a filling level (n) of the bottle is below a predetermined threshold, and a communication unit (6, 460) arranged to transmit a notification (N) relating to said filling level to a remote electronic device (8, 800) on the basis of said detection; the processing unit (450) is arranged to determine that the fill level of the bottle is below said predetermined threshold when one of the optical sensors receives one of said infrared light beams.

2. The detection system (100) according to the preceding claim, wherein the infrared light emitter (400a) and the infrared light sensor (400b) are intended to be arranged opposite a side wall of the bottle (220) and in line with a bottom wall (250) of the bottle.

3. The detection system (1, 100) according to one of the preceding claims, the acquisition unit comprising an enclosure (31, 310) defining a housing (L) intended to receive, at least partially, the bottle (22, 220) and comprising an attachment member (34, 320) for attaching the enclosure to the diffuser (2, 200), the optical sensor (4, 400b) being arranged in the enclosure so as to face a side wall of the bottle when the bottle is received in the housing.

4. The detection system (1, 100) according to the preceding claim, wherein the enclosure (31, 310) comprises a peripheral wall (32, 320) laterally delimiting the housing (L), said peripheral wall comprising a lateral aperture (38, 401), the optical sensor (4, 400b) being arranged in the enclosure opposite this aperture.

5. The detection system (100) according to the preceding claim, wherein the processing unit (450) and the communication unit (460) are incorporated in the acquisition unit (300).

6. The detection system (1, 100) according to one of the preceding claims, wherein the acquisition unit (3, 300) comprises at least one sensor arranged to acquire at least one item of information relating to the environment of the diffuser (2, 200).

7. The detection system (1, 100) according to one of the preceding claims, wherein the acquisition unit (3, 300) comprises a magnetic field sensor able to detect a magnetic field emitted by a label affixed to the bottle (22, 220).

8. The detection system (1, 100) according to the preceding claim, wherein the acquisition unit (3, 300) comprises a control module (45, 450) for the communication unit (46, 460), the control module being arranged to deactivate the communication unit in the absence of detection of a magnetic field by the magnetic field sensor.

9. An acquisition unit (3, 300) of a system (1, 100) for detecting the state of filling of a bottle (22, 220) of a diffuser (2, 200),
the acquisition unit (3, 300) being provided with at least one optical sensor (4, 400b) designed to be arranged opposite the bottle in order to acquire at least one light beam that has passed through the bottle, **characterized in that** the acquisition unit (300) comprises two infrared light sensors (400b) designed to be positioned opposite the bottle (220) at two different points, at the same height, and two infrared light emitters (400a) each designed to be positioned opposite the bottle opposite one of the infrared light sensors and arranged to emit at least one infrared light beam through the bottle towards this optical sensor.

10. An assembly of a product diffuser (2, 200), the diffuser comprising a bottle (22, 220) containing said product, and an acquisition unit (3, 300) according to the preceding claim.
